# FASCICULE DE BREVET EUROPEEN

(11) **EP 2 571 760 B1**
(45) Date de publication et mention de la délivrance du brevet: **08.04.2015**
(21) Numéro de dépôt: 11727406.8
(22) Date de dépôt: 17.05.2011
(51) Int. Cl.: B64C 25/20, B64C 25/24, B64C 25/26

(54) **ATTERRISSEUR EQUIPE D'UN DISPOSITIF DE DEVERROUILLAGE DANS UNE POSITION DEPLOYEE**
FAHRWERKSENTRIEGLUNGSMECHANISMUS
LANDING GEAR WITH GEAR UNLOCK DEVICE

(30) Priorité: 18.05.2010 FR 1053841
(43) Date de publication de la demande: 27.03.2013
(73) Titulaire: Messier-Bugatti-Dowty, 78140 Vélizy-Villacoublay (FR)
(72) Inventeur: DUCOS, Dominique, 91600 Savigny Sur Orge (FR)
(74) Mandataire: Parzy, Benjamin Alain
(86) Numéro de dépôt international: PCT/EP2011/057993
(87) Numéro de publication internationale: WO 2011/144629

(56) Documents cités:
- EP-A1- 0 555 121
- FR-A1- 2 928 623

## Description

L'invention est relative à un nouveau dispositif de manoeuvre et de blocage des atterrisseurs à contrefiche briseuse.

### ARRIERE-PLAN DE L'INVENTION

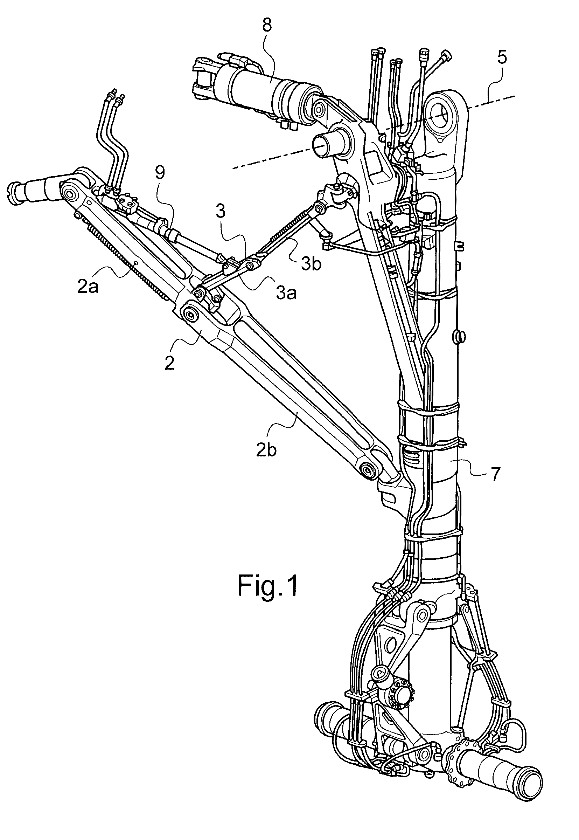

La figure 1 est une vue en perspective d'un atterrisseur selon l'art antérieur. L'atterrisseur est monté pivotant suivant un axe 5 sur une structure d'aéronef entre une position rétractée et une position déployée, l'atterrisseur étant stabilisé en position déployée par un organe de contreventement comportant une contrefiche briseuse 2 à deux bielles 2a, 2b articulées entre elles. Lorsque l'atterrisseur est en position déployée, les deux bielles 2a, 2b sont maintenues sensiblement alignées entre elles par un organe de stabilisation 3 à deux biellettes 3a, 3b articulées entre elles et qui sont également maintenues sensiblement alignées entre elles par un organe de verrouillage comportant ici des ressorts attelés à l'une des biellettes pour les ramener vers la position sensiblement alignée définie par des butées internes.

La contrefiche 2 est attelée d'une part au caisson de l'atterrisseur et d'autre part à la structure de l'aéronef, tandis que l'organe de verrouillage est attelé d'une part à la contrefiche 2 et d'autre part au caisson, ou à la structure de l'aéronef.

Il est connu de provoquer le mouvement de l'atterrisseur au moyen d'une part d'un actionneur de relevage, par exemple un vérin 8 attelé au caisson de l'atterrisseur, et d'autre part d'un actionneur de déverrouillage 9 chargé de neutraliser l'organe de verrouillage.

Ainsi, partant de la position déployée, on actionne d'abord l'actionneur de déverrouillage 9, qui agit à l'encontre de l'organe de stabilisation 3 pour forcer les deux biellettes de l'organe de stabilisation 3 à se désaligner, ce qui force par conséquent les deux bielles de la contrefiche à se désaligner. Ainsi désalignées, elles ne peuvent plus s'opposer au relevage de l'atterrisseur provoqué par l'action de l'actionneur de relevage.

Il est connu d'utiliser un vérin hydraulique comme actionneur de déverrouillage 9. Un exemple d'un tel agencement est montré dans le document FR-A-2 928 623.

Toutefois, afin de simplifier la gestion des différents actionneurs au sein d'un aéronef, l'homme du métier cherche à remplacer les actionneurs hydrauliques par des actionneurs électriques. Il est connu de réaliser des vérins électriques mais ces derniers restent complexes, lourds à mettre en oeuvre et à maintenir en condition opérationnelle.

### OBJET DE L'INVENTION

L'invention vise à proposer un dispositif de déverrouillage de l'organe de verrouillage simple, fiable et pouvant recourir à un actionneur électrique simple.

### BREVE DESCRIPTION DE L'INVENTION

En vue de la réalisation de ce but, on propose un atterrisseur d'aéronef comportant une jambe articulée sur l'aéronef suivant un axe de relevage, la jambe étant stabilisée en position déployée par une contrefiche à deux bielles articulées entre elles, la contrefiche étant maintenue en position alignée par un organe de stabilisation comportant deux biellettes articulées entre elles, dont une biellette est articulée sur la contrefiche et une autre articulée sur la jambe ou sur l'aéronef, lesdites biellettes étant maintenues en position sensiblement alignées et verrouillées, l'atterrisseur comportant un dispositif de déverrouillage comprenant :
- un actionneur rotatif d'axe parallèle à un axe d'articulation des biellettes de l'organe de stabilisation ;
- une manivelle reliée à un arbre de l'actionneur ;
- un cliquet articulé à l'extrémité de la manivelle et comportant un redan ;
- une olive solidaire et saillante d'une des biellettes de l'organe de stabilisation ;
- des moyens de rappel du cliquet en appui vers l'olive ;
la manivelle étant actionnable entre une première position angulaire pour laquelle l'olive est en contact avec le cliquet en regard du redan alors que les biellettes sont sensiblement alignées, et une seconde position angulaire que la manivelle atteint alors que le redan du cliquet a repoussé l'olive, provoquant le désalignement des biellettes de l'organe de stabilisation.

Ainsi le dispositif de déverrouillage permet le déblocage de l'organe de stabilisation à l'aide d'un actionneur simple, le tout sans liaison permanente entre les biellettes de l'organe de stabilisation et l'actionneur, de sorte que si l'actionneur se bloque, l'atterrisseur puisse quand même être manoeuvré.

A cet égard, et selon un mode particulier de réalisation, le dispositif de déverrouillage comporte une commande de secours permettant de séparer le cliquet de l'olive en cas de défaillance de l'actionneur lors de la descente de l'atterrisseur.

Le dispositif de déverrouillage permet également, dans un mode particulier de réalisation, de bloquer en position sensiblement alignées les biellettes de l'organe de stabilisation.

Avantageusement, la biellette qui porte l'olive comporte un galet d'échappement coopérant avec le cliquet pour séparer le cliquet de l'olive lors du mouvement de l'actionneur de la première position angulaire à la seconde position angulaire.

### BREVE DESCRIPTION DES DESSINS

L'invention sera mieux comprise à la lumière des figures des dessins annexés données à titre d'exemple non limitatif, parmi lesquelles, outre la figure 1 déjà évoquée :
- La figure 2 est une vue simplifiée d'un atterrisseur selon un mode particulier de réalisation de l'invention
- La figure 3 est une vue agrandie du dispositif de déverrouillage équipant l'atterrisseur illustré à la figure 2 selon un mode particulier de réalisation de l'invention
- La figure 3a est une vue partielle du dispositif de déverrouillage illustré à la figure 3 selon un autre mode de réalisation de l'invention
- Les figures 4a à 4d sont des vues du même dispositif de déverrouillage, illustrant celui ci à différentes étapes de relevage de l'atterrisseur
- Les figures 5a à 5d sont des vues du même dispositif de blocage, illustrant celui ci à différentes étapes de déploiement de l'atterrisseur
- Les figures 6a à 6d sont des vues du même dispositif de déverrouillage, illustrant celui ci à différentes étapes de déploiement de l'atterrisseur en cas le panne de l'actionneur rotatif
- La figure 7 est une vue du dispositif de déverrouillage selon l'invention comportant des moyens de commande de secours

### DESCRIPTION DETAILLEE DE L'INVENTION

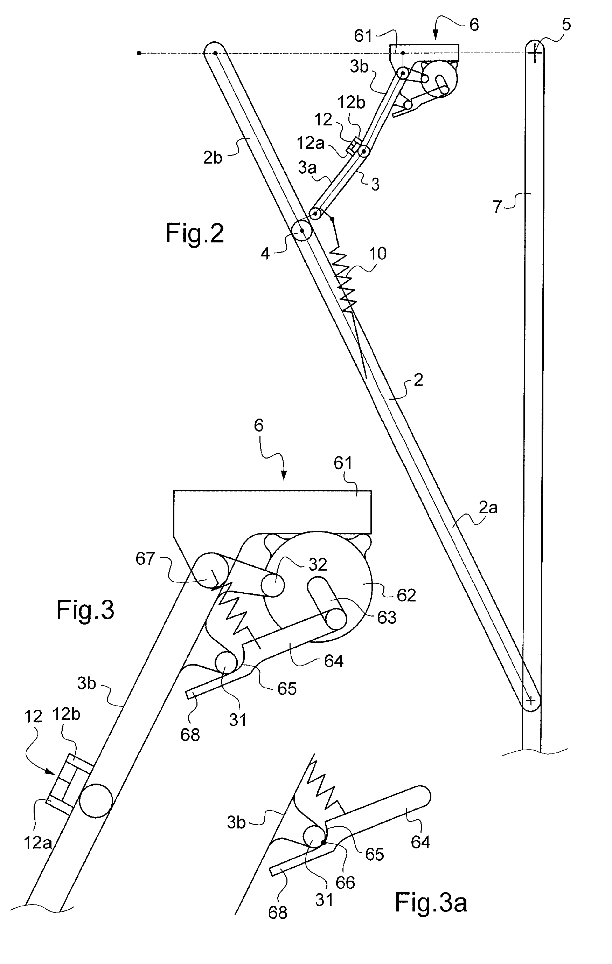

En référence à la figure 2 et comme déjà indiqué en référence à la figure 1, l'atterrisseur selon l'invention comporte une jambe 7 articulée sur l'aéronef selon un axe de relevage 5 perpendiculaire au plan de la figure. Il comporte également un organe de contreventement comprenant une contrefiche 2 elle-même constituée de deux bielles 2a et 2b, articulées entre elles en un genou 4 et attelées respectivement à la jambe 7 et à l'aéronef. Les bielles 2a et 2b de la contrefiche 2 sont maintenues en position sensiblement alignées par un organe de stabilisation 3 comportant deux biellettes 3a et 3b articulées entre elles, dont une biellette 3a est articulée sur la contrefiche 2 et une autre 3b est articulée sur la jambe, lesdites biellettes 3a et 3b étant maintenues en position sensiblement alignées et verrouillées par au moins un organe de verrouillage comportant un ressort de verrouillage 10 qui rappelle les biellettes vers une position sensiblement alignée définie par une butée 12. Le ressort de déverrouillage 10 permet d'éviter une rupture accidentelle de l'alignement de l'organe de stabilisation mais impose un effort important pour briser cet alignement de façon volontaire lors d'un relevage de l'atterrisseur. La position sensiblement alignée des biellettes 3a et 3b de l'organe de stabilisation 3 est assuré par une butée 12 comprenant deux demi butées 12a et 12b montées respectivement sur les biellettes 3a et 3b et coopérant pour bloquer le mouvement de l'organe de stabilisation 3.

En référence maintenant à la figure 3, l'atterrisseur est selon l'invention équipé d'un dispositif de déverrouillage 6 qui comporte ici :
- un support 61 pouvant être attaché sur l'aéronef ou sur la jambe 7,
- un actionneur rotatif 62, fixé au support 61, et d'axe parallèle à l'axe des biellettes 3a et 3b de l'organe de stabilisation,
- une manivelle 63 reliée par une de ses extrémités à l'arbre rotatif de l'actionneur 62,
- un cliquet 64 articulé à l'extrémité de la manivelle 63 et comportant un corps dans lequel est formé un redan 65 et une tige 68 prolongeant le corps au delà du redan,
- Une olive 31 solidaire et saillante de l'organe de stabilisation 3 et placée sur une des biellettes 3b,
- Un galet d'échappement 32 placé sur la même biellette 3b que l'olive 31,
- Et un ressort 67 de rappel du cliquet 64 vers l'olive 31.

La figure 3 illustre également la butée 12 dans une position pour laquelle les demi butées 12a et 12b sont en contact et garantissent l'alignement des biellettes 3a et 3b. Dans cette position, le redan 65 est ménagé dans le cliquet 64 de sorte qu'il ne soit pas en contact avec l'olive 31.

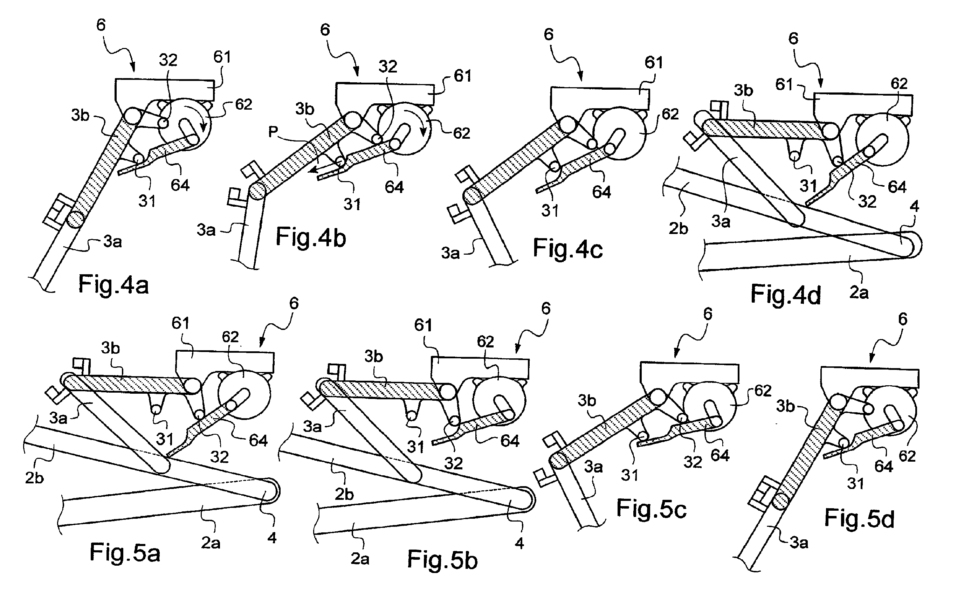

Les figures 4a à 4d illustrent le fonctionnement du dispositif de déverrouillage 6 lorsque l'atterrisseur passe de la position déployée à la position rétractée. La figure 4a illustre l'actionneur 62 dans une première position angulaire D correspondant à l'atterrisseur déployé, pour laquelle l'olive 31 est en contact avec le cliquet 64 en regard du redan 65. La position sensiblement alignée des biellettes 3a et 3b de l'organe de stabilisation 3 est assurée par des demi-butées 12a et 12b montées respectivement sur les biellettes 3a et 3b et qui forment une butée 12.

Comme illustré à la figure 4b, l'actionneur est ensuite actionné dans le sens indiqué par la flèche, provoquant une poussée du cliquet (flèche P) sur la biellette 3b par l'intermédiaire du redan 65 et de l'olive 31, et par conséquent la rupture de l'alignement des biellettes 3a et 3b de l'organe de stabilisation 3. L'actionneur 62 poursuit son mouvement jusqu'à ce que le cliquet 64 entre en contact avec le galet d'échappement 32. Ce dernier repousse le cliquet 64 et rompt l'appui entre l'olive 31 et le cliquet 64 comme illustré en figure 4c. L'actionneur 62 est représenté ici dans une seconde position angulaire R dans laquelle il n'exerce donc plus de poussée sur la biellette 3b de l'organe de stabilisation 3. Le vérin de relevage 8 prend alors le relais pour provoquer la remontée de l'atterrisseur. Lors de cette remontée, l'olive 31 se sépare de plus en plus du cliquet 64, le galet d'échappement 32 glissant sur le corps du cliquet 64. La figure 4d illustre le dispositif de déverrouillage 6 lorsque l'atterrisseur est en position rétractée.

Les figures 5a à 5d illustrent le processus de déploiement de l'atterrisseur. Avant le déploiement de l'atterrisseur, on fait revenir l'actionneur 62 de sa seconde position R à sa première position D, le galet d'échappement 32 glissant sur le corps du cliquet 64 sans que le galet d'échappement 32 ne vienne coopérer avec le redan 65, comme illustré en 5a et 5b. Dans une seconde étape, le vérin de relevage 8 déploie l'atterrisseur, faisant pivoter la biellette 3a et rapprochant l'olive 31 du redan 65. L'olive 31 entre en contact avec la tige 68 du cliquet 64 de sorte que le galet d'échappement 32 se sépare du cliquet 64 comme illustré en figure 5c. En fin de course, les butées 12a et 12b viennent en contact pour former la butée 12 et pour immobiliser les biellettes 3a et 3b en une position sensiblement alignée.

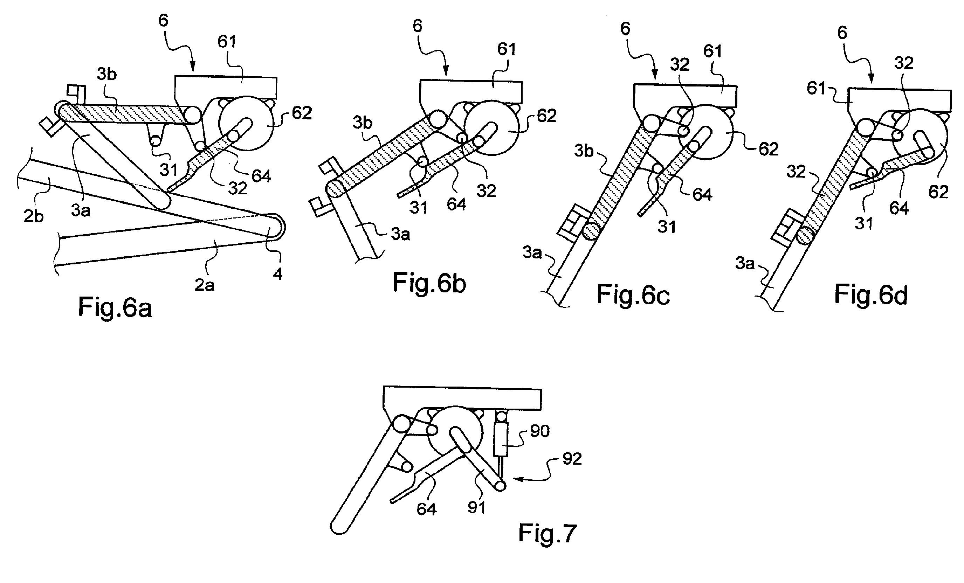

Les figures 6a à 6d illustrent le fonctionnement du dispositif de déverrouillage 6 en cas d'une éventuelle défaillance de l'actionneur 62, ce dernier étant bloqué dans sa seconde position angulaire R. Le galet d'échappement 32, comme illustré en figure 6a à 6c, permet alors de repousser le cliquet 64 et d'éviter que l'olive 31 ne vienne en butée contre le redan 65 lors du déploiement de l'atterrisseur 2, ce qui aurait pour effet de bloquer les biellettes 3a et 3b dans une position désalignée impropre à stabiliser la contrefiche 2. La figure 6d illustre le dispositif de déverrouillage 6 après réinitialisation de la position de l'actionneur 62, par des moyens externes au dispositif, par exemple manuels.

A cet effet, le dispositif de déverrouillage 6 pourra comporter un actionneur de secours 92, comme illustré en figure 7, pouvant être actionné manuellement ou avantageusement par un vérin 90 attelé au cliquet 64 par l'intermédiaire d'un bras 91 et permettant de débloquer le cliquet 64 en cas de grippage de l'actionneur 62 dans une position intermédiaire entre la première et la seconde position angulaire afin de permettre le déploiement complet de l'atterrisseur.

L'invention ainsi décrite permet l'utilisation d'actionneurs tournants simples, légers et fiables comme des moteurs électriques pas à pas, grâce à un agencement de pièces mécaniques simples et fiables. De plus, l'atterrisseur peut toujours être débloqué par une action extérieure simple, quelle que soit la situation de blocage car la liaison entre l'actionneur et l'organe de stabilisation n'est pas une liaison permanente.

L'invention n'est pas limitée à ce qui vient d'être décrit, mais au contraire englobe toute variante entrant dans le cadre défini par les revendications.

En particulier, la figure 3a illustre une variante de réalisation de l'invention dans laquelle la position sensiblement alignée des biellettes 3a et 3b est assurée par la coopération de l'olive 31 avec le redan 65 qui forment une butée 66. Dans cette variante, l'actionneur de déverrouillage 6 a pour fonction de bloquer l'organe de stabilisation 3 en position sensiblement rectiligne en remplacement ou en complément d'une butée 12 placée sur les biellettes 3a et 3b. Pour cela, le redan 65 est ménagé dans le cliquet 64 de sorte que lorsque les biellettes 3a et 3b sont sensiblement alignées, l'olive 31 est en contact avec le redan 65 lorsque l'actionneur est dans la première position angulaire.

Le dispositif de déverrouillage 6 peut être placé sur l'aéronef, sur la contrefiche 2 ou sur la jambe 7 de l'atterrisseur. Ces différents emplacements ne modifient en rien le dispositif ou son fonctionnement. A cet effet, le support 61 du dispositif de déverrouillage 6 est facultatif, l'actionneur 62 pouvant être monté directement sur l'aéronef, sur la contrefiche 2 ou sur la jambe 7.

De plus, le moyen de rappel du cliquet 64 en appui vers l'olive 31 peut comporter en complément ou en remplacement du ressort 67, un ressort de torsion sur l'articulation entre la manivelle 63 et le cliquet 64.

Enfin, le galet d'échappement 32 permet l'échappement du cliquet 64 en cas de blocage de l'actionneur 62 dans sa seconde position angulaire. Toutefois, cette disposition n'est pas indispensable. D'autres moyens peuvent être envisagés, en particulier il est possible l'allonger la tige 68 du cliquet 64 afin qu'elle reste en permanence en appui sur l'olive 31. Le fonctionnement du dispositif de déverrouillage 6 sera sensiblement le même que celui décrit par les figures 4a à 4d et 5a à 5d, l'olive 31 glissant sur la tige 68 sans rompre son appui.

## Revendications

1. Atterrisseur d'aéronef comportant une jambe (7) articulée sur l'aéronef suivant un axe de relevage (5), la jambe étant stabilisée en position déployée par une contrefiche (2) à deux bielles (2a, 2b)articulées entre elles, la contrefiche étant maintenue en position alignée par un organe de stabilisation (3) comportant deux biellettes (3a, 3b) articulées entre elles, dont une biellette (3a) est articulée sur la contrefiche et une autre articulée(2) sur la jambe ou sur l'aéronef, lesdites biellettes (3a, 3b) étant maintenues en position sensiblement alignée et verrouillée, **caractérisé en ce que** l'atterrisseur comporte un dispositif de déverrouillage (6) comprenant :
- un actionneur rotatif (62) d'axe parallèle à un axe d'articulation des biellettes (3a, 3b) de l'organe de stabilisation,
- une manivelle (63) reliée à un arbre de l'actionneur (62),
- un cliquet (64) articulé à l'extrémité de la manivelle et comportant un redan (65),
- une olive (31) solidaire et saillante d'une des biellettes (3b) de l'organe de stabilisation (3),
- des moyens de rappel du cliquet (64) en appui vers l'olive (31),
la manivelle (63) étant actionnable entre une première position angulaire pour laquelle l'olive (31) est en contact avec le cliquet (64) en regard du redan (65) alors que les biellettes sont sensiblement alignées, et une seconde position angulaire que la manivelle (63)atteint alors que le redan (65) du cliquet (64) a repoussé l'olive (31), provoquant le désalignement des biellettes (3a, 3b) de l'organe de stabilisation (3).

2. Atterrisseur selon la revendication 1 dans lequel la biellette (3b) qui porte l'olive (31) comporte un galet d'échappement (32) coopérant avec le cliquet (64) pour séparer le cliquet (64) de l'olive (31) lors du mouvement de l'actionneur (62) de la première position angulaire à la seconde position angulaire.

3. Atterrisseur selon la revendication 1 dans lequel le dispositif de déverrouillage 6 comporte une commande de secours (92) permettant de séparer le cliquet (64) de l'olive (31) en cas de défaillance de l'actionneur (32) lors de la descente de l'atterrisseur.

4. Atterrisseur selon la revendication 1 dans lequel les biellettes (3a, 3b) sont maintenues en position sensiblement alignée par la coopération de l'olive (31) avec le redan (65) lorsque l'actionneur est dans la première position angulaire.

## Patentansprüche

1. Flugzeugfahrwerk, umfassend ein Bein (7), das an dem Flugzeug längs einer Hubachse (5) angelenkt ist, wobei das Bein in der ausgefahrenen Position durch eine Strebe (2) mit zwei aneinander angelenkten Lenkern (2a, 2b) stabilisiert ist, wobei die Strebe durch ein Stabilisierungselement (3), das zwei aneinander angelenkte kleine Lenker (3a, 3b) umfasst, in gestreckter Position gehalten wird, wobei ein kleiner Lenker (3a) an der Strebe angelenkt ist und ein anderer an dem Bein oder an dem Flugzeug angelenkt ist, wobei die genannten kleinen Lenker (3a, 3b) in einer im Wesentlichen fluchtenden und verriegelten Position gehalten werden, **dadurch gekennzeichnet, dass** das Fahrwerk eine Entriegelungsvorrichtung (6) umfasst, welche umfasst:
- einen Drehaktor (62) mit einer zu einer Gelenkverbindungsachse der kleinen Lenker (3a, 3b) des Stabilisierungselements parallelen Achse,
- eine Kurbel (63), die mit einer Welle des Aktors (62) verbunden ist,
- eine Sperrklinke (64), die am Ende der Kurbel angelenkt ist und einen Absatz (65) umfasst,
- eine Olive (31), die mit einem der kleinen Lenker (3b) des Stabilisierungselements (3) verbunden ist und von derselben vorsteht,
- Mittel zum Rückstellen der Sperrklinke (64) in Anlage an die Olive (31),
wobei die Kurbel (63) zwischen einer ersten Winkelposition, bei der die Olive (31) in Kontakt mit der Sperrklinke (64) gegenüber dem Absatz (65) ist, während die kleinen Lenker im Wesentlichen miteinander fluchten, und einer zweiten Winkelposition betätigbar ist, die die Kurbel (63) erreicht, wenn der Absatz (65) der Sperrklinke (64) die Olive (31) weggeschoben hat, wodurch das Einknicken der kleinen Lenker (3a, 3b) des Stabilisierungselements (3) hervorgerufen wird.

2. Fahrwerk nach Anspruch 1, wobei der kleine Lenker (3b), der die Olive (31) trägt, eine Freigaberolle (32) umfasst, die mit der Sperrklinke (64) zusammenwirkt, um die Sperrklinke (64) von der Olive (31) während der Bewegung des Aktors (62) von der ersten Winkelposition in die zweite Winkelposition zu trennen.

3. Fahrwerk nach Anspruch 1, wobei die Entriegelungsvorrichtung (6) eine Notsteuerung (92) umfasst, die das Trennen der Sperrklinke (64) von der Olive (31) bei einem Versagen des Aktors (32) während der Abwärtsbewegung des Fahrwerks ermöglicht.

4. Fahrwerk nach Anspruch 1, wobei die kleinen Lenker (3a, 3b) durch das Zusammenwirken der Olive (31) mit dem Absatz (65) in der ersten Winkelposition des Aktors in einer im Wesentlichen fluchtenden Position gehalten werden.

## Claims

1. Aircraft landing gear including a leg (7) that is articulated to the aircraft about a raising axis (5), the leg being stabilized when in a deployed position by a strut (2) that includes two rods (2a, 2b) that are articulated to each other and is held in an aligned position by a stabilizer member (3) that includes two links (3a, 3b) that are articulated to each other, of which one link (3a) is articulated to the strut and the other link (3b) is articulated to the leg or to the aircraft, said links (3a, 3b) being held in a locked and substantially aligned position, **characterized in that** the landing gear includes an unlocking device (6) that includes:
- a rotary actuator (62) that has an axis parallel to an articulation axis of the links (3a, 3b) of the stabilizer member,
- a crank (63) that is connected to a shaft of the actuator (62),
- a pawl (64) that is articulated to the end of the crank and includes a step (65),
- an oval knob (31) that is integral with and projects from one link (3b) of the stabilizing element (3), and
- means for biasing the pawl (64) toward the oval knob (31),
the crank (63) being operable between a first angular position in which the oval knob (31) is in contact with the pawl (64) and facing the step (65) and the links are substantially aligned and a second angular position which the crank (63) reaches when the step (65) of the pawl (64) has pushed back the oval knob (31), causing misalignment of the links (3a, 3b) of the stabilizing element (3).

2. Landing gear according to claim 1 wherein the link (3b) that carries the oval knob (31) includes an escape roller (32) cooperating with the pawl (64) to separate the pawl (64) from the oval knob (31) during movement of the actuator (62) from the first angular position to the second angular position.

3. Landing gear according to claim 1 wherein the locking device (6) includes an emergency control member (92) for separating the pawl (64) from the oval knob (31) in the event of failure of the actuator (32) when the landing gear is lowered.

4. Landing gear according to claim 1 wherein the links (3a, 3b) are held in a substantially aligned position by cooperation of the oval knob (31) with the step (65) when the actuator is in the first angular position.
